# EUROPÄISCHE PATENTSCHRIFT

(11) **EP 3 728 014 B1**
(45) Veröffentlichungstag und Bekanntmachung des Hinweises auf die Patenterteilung: **08.05.2024**
(21) Anmeldenummer: 18829836.8
(22) Anmeldetag: 20.12.2018
(51) Int. Cl.: B63B 32/10

(54) **SURFBOARD MIT WECHSELAKKUMULATOR**
SURFBOARD WITH REPLACEABLE BATTERY
PLANCHE DE SURF ÉQUIPÉE D'UN ACCUMULATEUR INTERCHANGEABLE

(30) Priorität: 21.12.2017 DE 102017130946
(43) Veröffentlichungstag der Anmeldung: 28.10.2020
(73) Patentinhaber: WBV Weisenburger Bau+Verwaltung GmbH, 76131 Karlsruhe (DE)
(72) Erfinder: WEISENBURGER, Nicolai, 76131 Karlsruhe (DE)
(74) Vertreter: Groth, Wieland
(86) Internationale Anmeldenummer: PCT/EP2018/086129
(87) Internationale Veröffentlichungsnummer: WO 2019/122087

(56) Entgegenhaltungen:
- EP-A1- 2 299 516
- DE-A1-102009 041 397
- DE-A1-102013 216 271
- KR-A- 20170 000 622
- US-A- 2 771 523
- US-A- 2 878 430
- US-A- 2 944 864
- US-A- 3 039 837
- US-A- 5 077 722
- US-A- 6 134 115
- US-A1- 2004 142 753
- US-A1- 2011 201 238

## Beschreibung

Die Erfindung betrifft ein Surfboard mit elektrischem Antrieb und einen Akkumulator für den elektrischen Antrieb, wobei der Akkumulator in einem Akkumulatorgehäuse angeordnet ist, und eine erste Aussparung für das Akkumulatorgehäuse sowie einen Griff an dem Akkumulatorgehäuse.

Surfboards sind natürlich hinlänglich bekannt. Bei Surfboards handelt es sich im englischen Sprachgebrauch um Boards ohne Segel, auf dem ein Surfer durch den Vorschub einer Welle reiten kann. Im deutschen Sprachgebrauch spricht man hier von Wellenreiten.

In der US 2011/0201238 A1 ist ein Surfboard mit einem Akkumulator offenbart, der in einem Akkumulatorgehäuse untergebracht ist, das durch seitliche Pins im Surfboardrumpf lösbar befestigt ist.

In der US 2,944,864 ist ein Gehäuse für elektronische Bauteile beschrieben, die in einem Serverschrank angeordnet sind.

In der US 6,134,115 ist eine herausnehmbare elektronische Komponente in einem Computersystem offenbart.

In der US 2004/0142753 A1 ist ein Spielcomputer mit herausnehmbarer CPU-Einheit offenbart.

In der DE 10 2013 216 271 A1 ist eine über einen Hebelmechanismus herausnehmbare Speichervorrichtung für ein maritimes Objekt beschrieben.

In der KR 10-2017-0000622 ist ein Surfboard mit einem über Schrauben befestigtes Akkumulatorgehäuse offenbart.

In der US 2,878,430 ist ein Relaisrahmen offenbart, der durch eine Frontöffnung eines Gehäuses geschoben werden kann.

In der US 2,771,523 ist ein Relaisrahmen offenbart, der ebenfalls durch eine Frontöffnung in ein Gehäuse eigeschoben werden kann.

Die US 5,077,722 offenbart einen Verriegelungsmechanismus für eine Disk Drive Einheit.

Die US 3,039,837 offenbart ein elektronisches Chassis, das in einem Geräterahmen mittels eines Hebelmechanismus befestigbar ist.

Aus der DE 10 2009 041 397 A1 ist ein Gerät mit einer Batterieaufnahme für Rasenmäher bekannt.

In der US 2001/0042498 A1 ist ein Surfboard mit einem elektrischen Batterieantrieb offenbart, das über eine Steuerstange bedient werden kann. Die Batterien müssen mühselig ausgewechselt werden.

in der DE 10 1009 041397 A1 ist eine auswechselbare Batterie offenbart, die eine hohe mechanische Steckkraft aufweist, damit sie auch in erschütterungsintensiven Geräten wie Rasenmähern eine sichere Stromversorgung gestattet.

Das erfindungsgemäße Surfboard baut auf dieser Sportart auf. Der Surfer steht auf dem Surfboard und fährt vorzugsweise ohne Segel und ohne durch Wellen erzeugten Vortrieb über das Wasser.

Das erfindungsgemäße Surfboard weist einen elektrischen Antrieb auf. Surfboards mit elektrischem Antrieb sind beispielsweise aus der DE 20 2011 051 071 bekannt. Angetriebene Surfboards sind nicht auf hohen Wellengang angewiesen, sondern sie können auch in windstillen und brandungsarmen Gewässern benutzt werden. Der elektrische Antrieb des bekannten Surfboards wird über einen im Surfboard angeordneten Akkumulator mit Strom versorgt. Zum Aufladen des Akkumulators muss die Surftätigkeit unterbrochen werden, das Surfboard aus dem Wasser genommen werden und der Akkumulator über einen üblichen Netzanschluss aufgeladen werden. Dadurch kann das Surfboard während des Aufladens des Akkumulators nicht für sportliche Tätigkeiten benutzt werden. Einer durch die Laufzeit des Akkumulators bestimmten Benutzungsphase des Surfboards folgt vielmehr eine wenigstens ebenso lange Ladephase, deren Dauer im Wesentlichen durch die Ladezeit des Akkumulators bestimmt ist.

Die Wartephasen zum Aufladen des Akkumulators werden vom Surfer als nachteilig empfunden.

Es ist daher Aufgabe der Erfindung, ein Surfboard zur Verfügung zu stellen, das den oben genannten Nachteil vermeidet, zumindest verringert.

Die Aufgabe wird durch ein eingangs genanntes Surfboard mit den kennzeichnenden Merkmalen des Anspruchs 1 gelöst.

Bevorzugte Ausführungsformen sind Gegenstand der Unteransprüche.

Das erfindungsgemäße Surfboard weist einen elektrischen Antrieb, vorzugsweise im heckseitigen Bereich des Surfboards, auf; dabei handelt es sich vorzugsweise um einen Jetantrieb. Der Jetantrieb weist eine Öffnung an einer Unterwasserfläche des Surfboards auf sowie einen Wasserkanal, der von der Unterwasserfläche zu einer Düse an der heckseitigen Stirnseite des Surfboards verläuft. Die Düse kann schwenkbar oder nicht schwenkbar ausgebildet sein. Im Wasserkanal ist ein Propeller vorgesehen. Dabei wird durch die hohe Drehzahl des Propellers Wasser nach hinten entgegen der Fahrtrichtung aus der Düse herausgespritzt, wodurch dem Surfboard der nötige Vorschub verliehen wird. Der Propeller ist über einen Antriebsstrang mit einem Elektromotor verbunden, der über den Akkumulator mit Strom versorgt wird. Der Elektromotor ist vorzugsweise mit einer Steuerung elektrisch leitend verbunden, die Steuersignale an den Motor übermittelt und somit die Leistung des elektrischen Antriebs, also die Geschwindigkeit des Surfboards, steuert. Die Steuerung erhält die nötigen Steuersignale vorzugsweise über eine Fernsteuerung.

Erfindungsgemäß ist der Akkumulator des elektrischen Antriebs, der den Elektromotor mit Strom versorgt, auswechselbar. Er ist in einem Akkumulatorgehäuse angeordnet, das einen vorzugsweise als Bügelgriff ausgebildeten Griff aufweist, der an gegenüberliegenden Seiten des Akkumulatorgehäuses schwenkbar montiert ist. Das Akkumulatorgehäuse ist wechselbar in eine erste Aussparung einsetzbar. Die erste Aussparung kann im Rumpf des Surfboards angeordnet sein oder auch in einer separaten Antriebseinheit, die dann wiederum in den Rumpf eingeschoben, eingefügt o. ä. wird.

Der Griff weist einen Verriegelungsmechanismus mit der ersten Aussparung im Rumpf des Surfboards auf, wobei der Griff an den gegenüberliegenden Seiten je eine Nase aufweist, die beim Einsetzen des Akkumulatorgehäuses in die erste Aussparung im Rumpf des Surfboards durch Herunterklappen des Griffs des Akkumulatorgehäuses je einen Zapfen untergreift, der innenwandig der ersten Aussparung im Rumpf des Surfboards angeordnet ist. Der Verriegelungsmechanismus gibt beim Herausnehmen des Akkumulatorgehäuses aus der ersten Aussparung im Rumpf des Surfboards durch Hochklappen des Griffs den Zapfen frei. Im hochgeklappten Zustand weist der Bügel des Griffs den größtmöglichen Abstand vom Akkumulatorgehäuse auf, im heruntergeklappten Zustand den kleinstmöglichen.

Die erste Aussparung zur Aufnahme des Akkumulatorgehäuses im Rumpf des Surfboards ist vorzugsweise unterhalb der Trittfläche des Surfboards angeordnet. Der eingesetzte Akkumulator kann nachträglich von einem Bereich der Trittfläche abgedeckt werden oder die Oberseite des Akkumulatorgehäuses kann Teil der Trittfläche sein.

Das Akkumulatorgehäuse mit dem Akkumulator kann mit nur einer Hand und mit nur einem Handgriff in die erste Aussparung im Rumpf des Surfboards eingesetzt werden, und durch Herunterklappen des Griffs kann der Verriegelungsmechanismus automatisch ausgelöst werden, wodurch das Akkumulatorgehäuse mit dem Akkumulator in der ersten Aussparung fixiert wird. Ebenso kann mit nur einer Hand und mit nur einem Handgriff durch Hochklappen des Griffs und damit automatischer Lösung der Verriegelung die Fixierung des Akkumulatorgehäuses in der ersten Aussparung aufgehoben werden und das Akkumulatorgehäuse mit dem Akkumulator aus der ersten Aussparung entnommen werden. Vorzugsweise ist der Akkumulator über das Akkumulatorgehäuse durch einen Hochstromstecker mit dem Elektromotor im Surfboard verbunden. Dazu kann ein Pylon an der Bodenwand der Aussparung montiert sein. Als Gegenstück des Pylons ist an der Unterseite des Akkumulatorgehäuses, die bei Einsetzung des Akkumulatorgehäuses einem Boden der Aussparung zugewandt ist, eine zweite Aussparung mit einer Buchse zur Aufnahme des Pylons vorgesehen. Buchse und Pylon sind so zueinander angeordnet, dass sie nach Einsetzen des Akkumulatorgehäuses in die erste Aussparung im Rumpf des Surfboards und Herunterklappen des Griffs einen elektrischen Steckkontakt ausbilden, vorzugsweise einen Hochstromsteckkontakt. In einer weiteren Ausgestaltungsvariante können Pylon und Buchse auch vertauscht sein.

Der Akkumulator ist vorzugsweise einteilig mit genau einem Akkumulatorgehäuse ausgebildet. Er kann aber auch zwei-, drei- oder mehrteilig sein und aus einem, zwei oder mehreren einzelnen Akkumulatorgehäusen bestehen, denen dann jeweils ein Griff zugeordnet sein kann. Alternativ können je Akkumulatorgehäuse auch zwei Griffe vorgesehen sein.

Erfindungsgemäß weist der Akkumulator vorzugsweise eine Nennspannung von 24 V bis 100 V auf. Er hat vorzugsweise eine Kapazität von 25 Ah bis 100 Ah. Seine Leistung liegt bevorzugt im Bereich von 0,8 kWh bis 10 kWh. Der Akkumulator in dem Akkumulatorgehäuse ist vorzugsweise einer IP-Schutzklasse 67 und größer zuzuordnen, insbesondere der IP-Schutzklasse 67, 68 oder 69.

Das Surfboard kann gemäß einer ersten Ausführungsform aus einem durchgehend festen Rumpf bestehen. In der ersten Ausführungsform ist der Akkumulator im inneren des Rumpfes vorgesehen und in einem Akkumulatorgehäuse angeordnet, das in der ersten Aussparung im durchgehend festen Rumpf vorzugsweise im heckseitigen Teil des Surfboards angeordnet ist.

In einer zweiten Ausführungsform weist das Surfboard ein aufblasbares Rumpfteil und eine Antriebseinheit auf, die ein Heck des Surfboards zumindest mitausbildet und vorzugsweise lösbar mit dem aufblasbaren Rumpfteil verbunden ist. Dadurch kann das Surfboard leichter transportiert werden. In der zweiten Ausführungsform weist die Antriebseinheit den elektrischen Antrieb auf, und der Akkumulator ist in der ersten Aussparung im Antriebsteil des Rumpfes angeordnet. Das ausblasbare Rumpfbauteil weist günstigerweise zwei seitliche Arme auf, die die Antriebseinheit U-förmig umgreifen.

In einer bevorzugten zweiten Ausführungsform der Erfindung ist das aufblasbare Rumpfbauteil aus einem Drop-Stitch-Material gefertigt, bei dem zwei oder mehrere Kunststoffgewebebahnen, vorzugsweise Denier Polyester Gewebebahnen, übereinandergelegt werden. Die beiden Kunststoffgewebebahnen werden durch eine Vielzahl, d. h. tausende von Polyesterfäden, miteinander verbunden. Diese Polyesterfäden geben die vorgesehene Form des Boards vor, wenn der Raum zwischen den Gewebebahnen mit Druckluft gefüllt wird.

Die Polyesterfäden werden beidseitig mit den beiden Gewebebahnen vernäht. Die beiden miteinander vernähten Gewebebahnen bilden das Stützgerüst, das dem aufblasbaren Rumpfbauteil im aufgeblasenen Zustand seine mechanische Festigkeit verleiht. Die beiden miteinander verbundenen Gewebebahnen werden auf die gewünschte Form zugeschnitten. Die obere und die untere Gewebebahn werden mit PVC-Schichten, vorzugsweise mit drei Schichten, beschichtet, schichtweise gepresst und verklebt. Die Seiten werden mit Nahtband überlappend verklebt und gepresst, so dass das luftdichte, aufblasbare Rumpfbauteil entsteht.

Das Drop-Stitch-Verfahren ermöglicht es, das aufblasbare Rumpfbauteil mit hervorragenden mechanischen Festigkeitseigenschaften zu fertigen, die sowohl hohen Zug- als auch Druck- und Scherbelastungen standhalten. Die Drop-Stitch-Außenhaut des aufblasbaren Rumpfbauteiles ist luftdicht und im aufgeblasenen Zustand ausgesprochen verformungsstabil, so dass ein Surfer auch unter Beibehaltung der Außenform des aufgeblasenen Rumpfbauteils auf dem Rumpfbauteil stehen und surfen kann. Das aufblasbare Rumpfbauteil ist mit Luft unter Hochdruck befüllt. Die Befüllung kann mittels einer Luftpumpe oder eines Kompressors erfolgen. Der Kompressor kann mit elektrischer Energie von im Surfboard eingebauten Akkumulatoren gespeist werden.

Das aus dem Drop-Stitch-Material gefertigte, aufblasbare Rumpfbauteil ist vorzugsweise geräuscharm, weil die Lautstärke, die durch Wellenschlag, aber auch durch den elektrischen Antrieb erzeugt wird, durch den Rumpf gedämpft wird. Das aufblasbare Rumpfbauteil ist während des Betriebs schwingungsarm, weil durch das Drop-Stitch-Material Schwingungen reduziert werden. Da das aufblasbare Rumpfbauteil geringfügig verformbar ist, werden Stöße und Wellen usw. vorteilhafterweise aufgefangen. Vorteilhaft ist des Weiteren, dass der weichere Rumpf weniger Verletzungen hervorruft, z. B. wenn das Surfboard beim Herunterfallen des Surfers mit dem Surfer kollidiert.

Während der Ausübung des Sports steht der Surfer auf der Trittfläche des Surfboards und hält sein Gleichgewicht beispielsweise durch Greifen eines am Bug des Surfboards befestigten Seils, an dem sich bevorzugt ein Griff befindet.

Die Trittfläche wird durch eine Oberseite des Surfboards gebildet.

In der ersten Ausführungsform wird die Trittfläche durch die Oberseite des festen Rumpfes gebildet.

In der zweiten Ausführungsform wird die Trittfläche zu einem Teil aus der Oberseite der Antriebseinheit und zu einem anderen Teil aus der Oberseite des aufblasbaren Rumpfteils gebildet.

Der Griff des Akkumulatorgehäuses ist vorzugsweise nach Einsetzen des Akkumulatorgehäuses in die erste Aussparung im Rumpf des Surfboards unter die Trittfläche versenkbar. Besonders bevorzugt ist der Griff nach Herunterklappen in einer dritten Aussparung im Akkumulatorgehäuse versenkbar. Bevorzugt weist der Griff eine Hochziehvorrichtung auf. Diese kann beispielsweise eine Lasche, eine Schlaufe oder ein Vorsprung oder jedwede Vorrichtung sein, anhand derer der Griff gegriffen und hochgezogen werden kann. Alternativ weist das Akkumulatorgehäuse oder das Surfboard eine vierte Aussparung auf, die das Umgreifen und Hochziehen des Griffs ermöglicht.

Vorzugsweise bildet die Oberseite des Surfboards auch nach dem Einsetzen des Akkumulatorgehäuses eine ebene Trittfläche aus. Dazu kann eine Oberseite des Akkumulatorgehäuses auf verschiedene Weise ausgebildet sein.

In einer ersten Ausführungsform des Akkumulatorgehäuses bildet die Oberseite des Akkumulatorgehäuses und die Oberseite des Surfboards eine ebene Trittfläche für den Surfer aus. Dabei ist eine Tiefe der ersten Aussparung so bemessen, dass sie der Höhe des Akkumulatorgehäuses entspricht. Nach dem Einsetzen des Akkumulatorgehäuses fluchten die Oberseite des Surfboards und die Oberseite des Akkumulatorgehäuses. Der eingeklappte Griff, vorzugsweise Bügelgriff fluchtet ebenfalls mit der Oberfläche, so dass sich der Surfer gefahrenlos auf der Trittfläche bewegen kann.

In einer zweiten Ausführungsform des Akkumulatorgehäuses weist eine Seitenwand der ersten Aussparung entlang der Oberseite des Surfboards eine Rille, vorzugsweise eine umlaufende Rille auf, und die Oberseite des Akkumulatorgehäuses weist einen umlaufenden Überlapp auf, der nach dem Einsetzen des Akkumulatorgehäuses in die erste Aussparung auf der Rille aufliegt bzw. in der Rille einliegt. Die Oberseite des Surfboards, der Überlapp und die Oberseite des Akkumulatorgehäuses bilden wiederum eine ebene Trittfläche für den Surfer aus. Auch hier entspricht die Tiefe der ersten Aussparung der Höhe des Akkumulatorgehäuses.

In einer dritten Ausführungsform des Akkumulatorgehäuses ist eine separate Abdeckung vorgesehen, die in die die Seitenwand der ersten Aussparung entlang der Oberseite des Surfboards umlaufende Rille einsetzbar ist, so dass eine ebene Trittfläche durch die Oberseite der Abdeckung und die Oberseite des Surfboards ausgebildet wird. Das Akkumulatorgehäuse ist separat, vorzugsweise durch einen geringen Spalt beabstandet, im Rumpf unterhalb der Abdeckung angeordnet. Die Höhe des Akkumulatorgehäuses ist mindestens um die Dicke der Abdeckung geringer als die Tiefe der Aussparung, so dass die Abdeckung über dem Akkumulatorgehäuse angeordnet werden kann und dennoch eine ebene Trittfläche ausgebildet wird.

Die separate Abdeckung kann in die Rille eingeklemmt sein oder durch zusätzliche Befestigungsmittel wie Klemmverschlüsse, Magneten usw. befestigt sein. Die Abdeckung ist vorzugsweise ein fester Deckel, der sich auch unter Trittbelastung nicht verbiegt.

Die Erfindung wird anhand eines Ausführungsbeispiels in sieben Figuren beschrieben. Dabei zeigen:
- Fig. 1: ein erfindungsgemäßes Surfboard mit erster Aussparung im Rumpf und ein nicht in die erste Aussparung eingesetztes Akkumulatorgehäuse,
- Fig. 2: ein erfindungsgemäßes Surfboard mit der ersten Aussparung im Rumpf und dem in die erste Aussparung mit heruntergeklapptem Bügelgriff eingesetzten Akkumulatorgehäuse,
- Fig. 3: eine Detailansicht des in die erste Aussparung eingesetzten Akkumulatorgehäuses mit arretiertem Bügelgriff der Fig. 2,
- Fig. 4: eine Schnittansicht des erfindungsgemäßen Surfboards,
- Fig. 5: eine Schnittansicht einer ersten Ausführungsform des Akkumulatorgehäuses,
- Fig. 6: eine Schnittansicht einer zweiten Ausführungsform des Akkumulatorgehäuses mit überlappendem Rand,
- Fig. 7: eine Schnittansicht einer dritten Ausführungsform des Akkumulatorgehäuses mit separater Abdeckung.

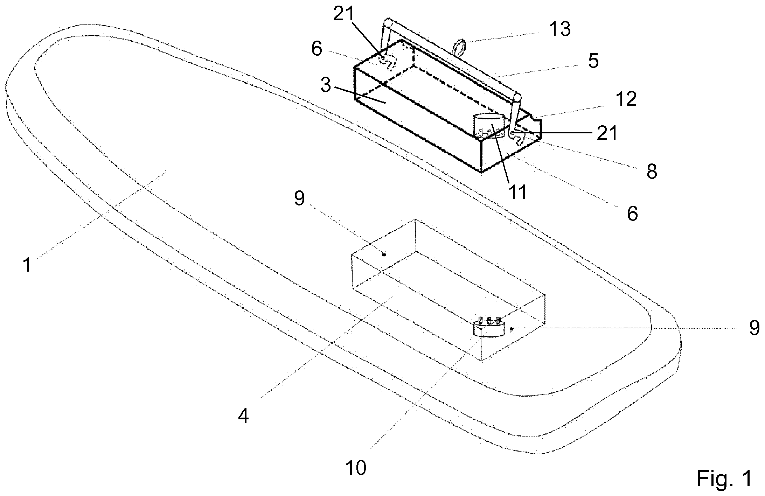

Fig. 1 zeigt eine schematische Schrägansicht eines erfindungsgemäßen Surfboards 1 mit einer ersten Aussparung 4 im Rumpf des Surfboards 1 und einem Akkumulatorgehäuse 3, wobei das Akkumulatorgehäuse 3 noch nicht in die erste Aussparung 4 eingesetzt ist.

Das Surfboard 1 weist einen durchgehend festen Rumpf in einer ersten Ausführungsform auf. Die erste Aussparung 4 ist im heckseitigen Teil des Surfboards 1 angeordnet. Das Akkumulatorgehäuse 3 weist einen Bügelgriff 5 auf, der an gegenüberliegenden Seiten 6 des Akkumulatorgehäuses 3 schwenkbar an Drehpunkten 21 montiert ist. In Fig. 1 ist der Bügelgriff 5 in hochgeklapptem Zustand dargestellt.

An einer Bodenwand der ersten Aussparung 4 befindet sich ein Pylon 10. An einer Unterseite des Akkumulatorgehäuses 3 befindet sich eine zweite Aussparung 11 mit einer Buchse. Sie stellt das Gegenstück zum Pyon 10 dar.

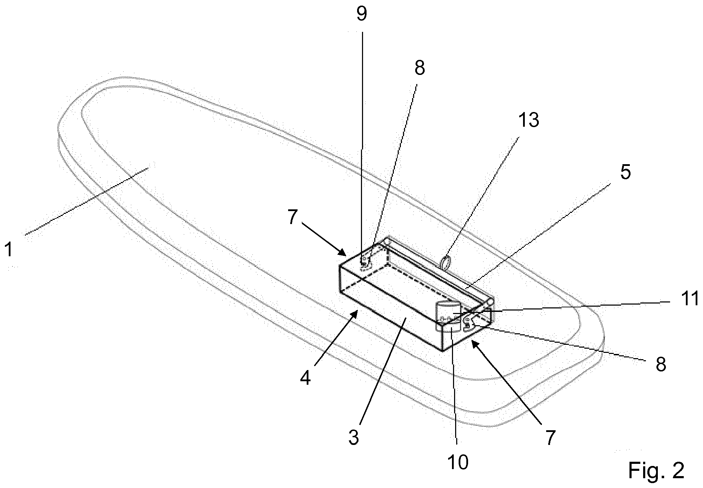

Fig. 2 zeigt das Surfboard der Fig. 1, wobei das Akkumulatorgehäuse 3 in der ersten Aussparung 4 eingesetzt und der Bügelgriff 5 heruntergeklappt ist.

Der Pylon 10 ist von der zweiten Aussparung 11, die als Buchse ausgebildet ist, aufgenommen worden. Buchse und Pylon 10 bilden einen elektrischen Steckkontakt.

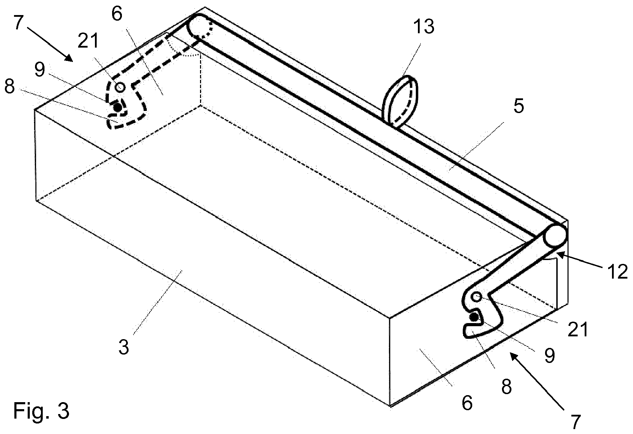

Fig. 3 zeigt eine Detailansicht des Akkumulatorgehäuses 3 der Fig. 2, das in der ersten Aussparung 4 mit dem heruntergeklapptem Bügelgriff 5 eingesetzt ist. An den gegenüberliegenden Seiten 6 des Akkumulatorgehäuses 3 weist der Bügelgriff 5 Nasen 8 auf, die beim Herunterklappen des Bügelgriffs 5 je einen Zapfen 9 untergreifen, die innenwandig der ersten Aussparung 4 an sich gegenüberliegenden Seiten angeordnet sind. Beim Herunterklappen des Bügelgriffs 5 wird der Bügelgriff 5 um die Drehpunkte 21 rotiert, wodurch automatisch die Nasen 8 des Bügelgriffes 5 die Zapfen 9 der ersten Aussparung 4 untergreifen und den Verriegelungsmechanismus 7 auslösen. Das Akkumulatorgehäuse 3 ist nach Einsetzen in die erste Aussparung 4 unter Herunterklappen des Bügelgriffs 5 fest fixiert. Der Bügelgriff 5 ist nach dem Herunterklappen in einer dritten Aussparung 12 im Akkumulatorgehäuse 3 versenkt. Als Hochziehvorrichtung 13 für den Bügelgriff 5 ist in Fig. 3 eine Schlaufe vorgesehen. Wird der Bügelgriff 5 an der Schlaufe 13 hochgezogen, so rotiert er um die Drehpunkte 21, wodurch die Nasen 8 die Zapfen 9 freigeben und der Verriegelungsmechanismus 7 gelöst wird.

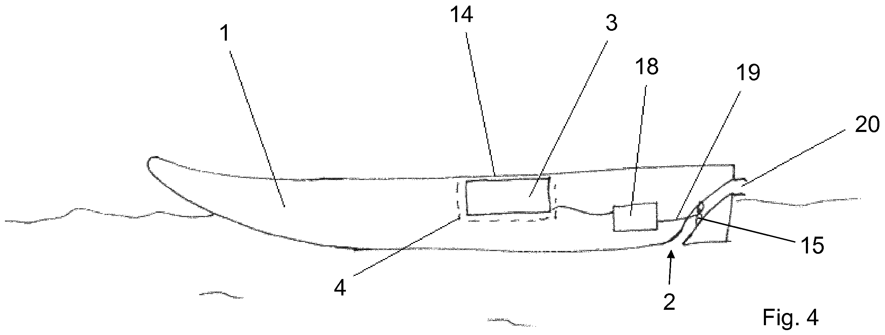

Fig. 4 zeigt eine Schnittansicht des erfindungsgemäßen Surfboards 1. Das Surfboard 1 weist einen durchgehend festen Rumpf gemäß der ersten Ausführungsform auf. Die erste Aussparung 4 ist im heckseitigen Teil des Rumpfes in der Boardoberseite angeordnet. Sie weist eine Abdeckung 14 auf, deren Außenseite eine durchgängige Fläche mit der Surfboardoberfläche bildet. Der Akkumulator ist im Akkumulatorgehäuse 3 in der ersten Aussparung 4 eingesetzt, und die Abdeckung 14 ist geschlossen. Der Bügelgriff 5 des Akkumulatorgehäuses 3 ist heruntergeklappt und unter eine Trittfläche versenkt. Der Akkumulator versorgt einen Elektromotor 18 eines Jetantriebs 2 mit Strom. Der Jetantrieb 2 weist einen Wassereinlass an der Unterwasserfläche des Surfboards auf sowie einen Wasserkanal, eine Düse 20 am heckseitigen Ende des Wasserkanals und einen Rotor 15, der über einen Antriebsstrang 19 mit dem Elektromotor 18 verbunden ist und bei Rotation Wasser nach hinten durch den Wasserkanal schiebt, das dann durch die Düse 20 entgegen der Fahrtrichtung herausspritzt und somit dem Surfboard 1 den nötigen Vorschub verleiht.

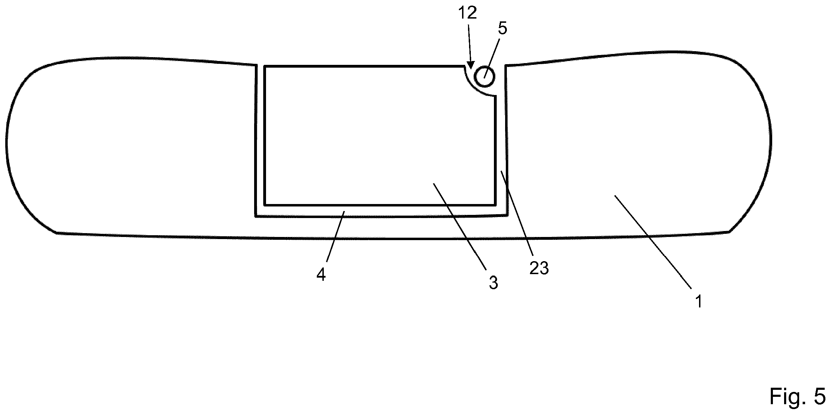

Die Fig. 5, 6 und 7 zeigen verschiedene Ausführungsformen des Akkumulatorgehäuses 3, insbesondere einer der Boardoberseite zugewandten Oberseite.

In Fig. 5 ist das Akkumulatorgehäuse 3 so ausgebildet, dass die Oberseite des Akkumulatorgehäuses 3 eine ebene Fläche mit der Oberseite des Surfboards 1 ausbildet, so dass eine Gesamttrittfläche entsteht. Ein Spalt 23 zwischen Akkumulatorgehäuse 3 und Seitenwand der ersten Aussparung 4 ist in Fig. 5 breiter eingezeichnet als er maßstäblich ausgebildet wäre. Der Bügelgriff 5 ist in die dritte Aussparung 12 des Akkumulatorgehäuses 3 eingeklappt, so dass eine Oberseite des Bügelgriffs 5 gleichfalls in einer Ebene mit der Oberseite des Akkumulatorgehäuses 3 und mit der Oberseite des Surfboards 1 angeordnet ist und eine Gesamttrittfläche ausbildet.

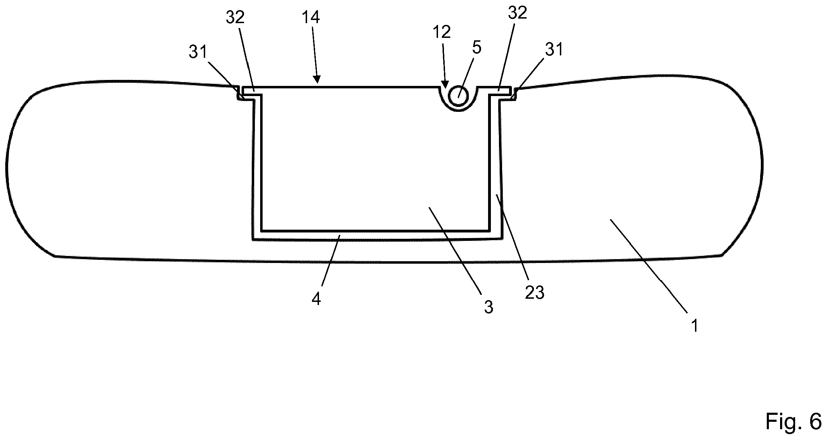

Fig. 6 zeigt eine zweite Ausführungsform des Akkumulatorgehäuses 3, dessen Oberseite größer ist als eine Querschnittsfläche der ersten Aussparung 4. Die Oberseite des Akkumulatorgehäuses 3 weist einen Überlapp 32 auf und bildet somit eine Abdeckung 14 oder einen Deckel aus, der integral mit dem Akkumulatorgehäuse 3 ausgeformt ist und seitliche Wandungen der ersten Aussparung 4 überlappt. Ein boardoberseitiges Ende der seitlichen Wandung der ersten Aussparung 4 weist eine umlaufende Rille 31 auf, in die der Überlapp 32 eingelegt ist. Eine Höhe der Rille 31 entspricht einer Dicke des Überlapps 32, so dass nach dem Einsetzen des Akkumulatorgehäuses 3 in die erste Aussparung 4 eine ebene Trittfläche durch die Oberseite des Surfboards 1 und die Oberseite des Akkumulatorgehäuses 3 ausgebildet wird. In der Oberseite des Akkumulatorgehäuses 3 ist die dritte Aussparung 12 eingebracht, die den heruntergeklappten Bügelgriff 5 aufnimmt. Durch eine hier nicht dargestellte Dichtung, z.B. eine Gummidichtung, zwischen Überlapp 32 und Rille 31 kann bei eingesetztem Akkumulatorgehäuse 3 ein Eindringen von Wasser in die erste Aussparung 4 verhindert werden.

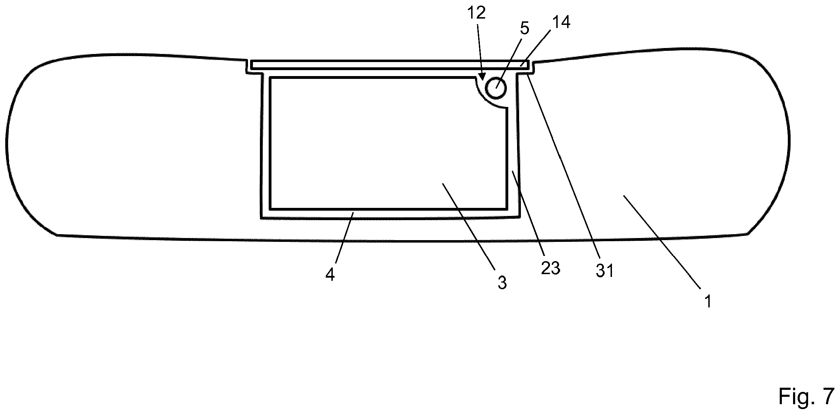

Fig. 7 zeigt eine dritte Ausführungsform des erfindungsgemäßen Akkumulatorgehäuses 3. Das Akkumulatorgehäuse 3 ist vollständig in die erste Aussparung 4 eingesetzt und zwar tiefer eingesetzt als in der ersten Ausführungsform gemäß Fig. 5. Die umlaufende Seitenwand der ersten Aussparung 4 weist wiederum die Rille 31 auf, in die bei der dritten Ausführungsform jedoch eine separate trittfeste Abdeckung 14 eingelegt ist. Die Höhe des Akkumulatorgehäuse 3 ist dabei so bemessen, dass sie im eingesetzten Zustand unterhalb oder auf gleicher Höhe mit einer unteren Auflagefläche der Rille 31 positioniert ist, so dass die Abdeckung 14 in die Rille 31 oberhalb des Akkumulatorgehäuses 3 einlegbar ist und vorzugsweise noch ein kleiner Luftspalt zwischen der Oberseite des Akkumulatorgehäuses 3 und einer Unterseite der Abdeckung 14 verbleibt. Die Abdeckung 14 selber weist eine nicht eingezeichnete Öse, Loch o. Ä. auf, mit deren Hilfe sie aus der Rille 31 herausgenommen werden kann. Die Abdeckung 14 kann in der Oberseite des Surfboards in die Rille 31 eingeklemmt sein oder es können zusätzliche, nicht eingezeichnete, Befestigungsmittel in Form von Klemmverschlüssen, Magneten o. Ä. vorgesehen sein. Durch eine hier nicht dargestellte Dichtung, z.B. eine Gummidichtung, zwischen Abdeckung 14 und Rille 31 kann bei eingesetztem Akkumulatorgehäuse 3 ein Eindringen von Wasser in die erste Aussparung 4 verhindert werden.

### Bezugszeichenliste

- 1: Surfboard
- 2: elektrischer Antrieb/Jetantrieb
- 3: Akkumulatorgehäuse
- 4: erste Aussparung
- 5: Bügelgriff
- 6: gegenüberliegende Seiten
- 7: Verriegelungsmechanismus
- 8: Nase
- 9: Zapfen

- 10: Pylon
- 11: zweite Aussparung
- 12: dritte Aussparung
- 13: Hochziehvorrichtung/Schlaufe
- 14: Abdeckung
- 15: Rotor
- 18: Elektromotor
- 19: Antriebsstrang

- 20: Düse
- 21: Drehpunkte
- 23: Spalt
- 31: Rille
- 32: Überlapp

## Patentansprüche

1. Surfboard mit einem elektrischen Antrieb (2), und
einem Akkumulator für den elektrischen Antrieb (2), wobei der Akkumulator in einem Akkumulatorgehäuse (3) angeordnet ist, und
einer ersten Aussparung (4) für das Akkumulatorgehäuse (3) und einem Griff (5) an dem Akkumulatorgehäuse (3),
wobei der Griff (5) als Bügelgriff ausgebildet ist,
der an gegenüberliegenden Seiten (6) des Akkumulatorgehäuses (3) schwenkbar montiert ist und
der Griff (5) einen Verriegelungsmechanismus (7) mit der ersten Aussparung (4) aufweist und der Griff (5) an den gegenüberliegenden Seiten (6) je eine Nase (8) aufweist, die bei heruntergeklapptem Griff (5) je einen Zapfen (9) inwandig der ersten Aussparung (4) untergreift und das Akkumulatorgehäuse (3) in der ersten Aussparung (4) fest fixiert.

2. Surfboard nach Anspruch 1,
**dadurch gekennzeichnet, dass** als Verriegelungsmechanismus (7) die Nase (8) beim Einsetzen des Akkumulatorgehäuses (3) in die erste Aussparung (4) durch Herunterklappen des Griffs (3) den Zapfen (9) untergreift und durch Hochklappen des Griffs (5) beim Herausnehmen des Akkumulatorgehäuses (3) den Zapfen (9) freigibt.

3. Surfboard nach Anspruch 1 oder 2,
**dadurch gekennzeichnet, dass** an der Bodenwand der ersten Aussparung (4) ein Pylon (10) vorgesehen ist und das Akkumulatorgehäuse (3) eine zweite Aussparung (11) mit einer Buchse zur Aufnahme des Pylons (10) aufweist, wobei Buchse und Pylon (10) so angeordnet sind, dass sie nach Einsetzen des Akkumulatorgehäuses (3) in die erste Aussparung (4) und Untergreifen der Nase (8) unter den Zapfen (9) durch Herunterklappen des Griffs (5) einen elektrischen Steckkontakt ausbilden.

4. Surfboard nach Anspruch 3,
**dadurch gekennzeichnet, dass** der Steckkontakt ein Hochstromsteckkontakt ist.

5. Surfboard nach einem der Ansprüche 1 bis 4,
**dadurch gekennzeichnet, dass**
der Griff (5) unter eine Trittfläche versenkbar ist.

6. Surfboard nach Anspruch 5,
**dadurch gekennzeichnet, dass**
der Griff (5) nach dem Herunterklappen in einer dritten Aussparung (12) im Akkumulatorgehäuse (3) versenkt ist.

7. Surfboard nach Anspruch 5 oder 6,
**dadurch gekennzeichnet, dass** der Griff (5) eine Hochziehvorrichtung (13) aufweist.

8. Surfboard nach einem der Ansprüche 1 bis 7,
**dadurch gekennzeichnet, dass** die erste Aussparung (4) in einer Oberseite des Surfboards (1) angeordnet ist.

9. Surfboard nach einem der Ansprüche 1 bis 8,
**dadurch gekennzeichnet, dass**
die erste Aussparung (4) im heckseitigen Teil des Surfboards angeordnet ist.

10. Surfboard nach Anspruch 8 oder 9,
**dadurch gekennzeichnet, dass** eine Oberseite des Akkumulatorgehäuses (3) und die Oberseite des Surfboards (1) eine ebene Trittfläche ausbilden.

11. Surfboard nach Anspruch 8, 9 oder 10,
**dadurch gekennzeichnet, dass** eine Seitenwand der ersten Aussparung (4) an der Oberseite des Surfboards (1) eine Rille (31) ausbildet, in die eine Abdeckung (14) eingesetzt ist und eine Oberseite der Abdeckung (14) und die Oberseite des Surfboards (1) eine ebene Trittfläche ausbilden.

12. Surfboard nach Anspruch 8, 9 oder 10,
**dadurch gekennzeichnet, dass** die Seitenwand der ersten Aussparung (4) an der Oberseite des Surfboards eine die Rille (31) ausbildet und die Oberseite des Akkumulatorgehäuses (3) einen Überlapp (32) ausbildet und der Überlapp (32) in der Rille (31) liegt und die Oberseite des Akkumulatorgehäuses (3) mit dem Überlapp (32) und der Oberseite des Surfboards (1) die ebene Trittfläche ausbilden.

13. Surfboard nach einem der vorstehenden Ansprüche,
**gekennzeichnet durch** ein aufblasbares Rumpfbauteil und eine Antriebseinheit und **dadurch gekennzeichnet, dass** der Akkumulator und der elektrische Antrieb (2) in der Antriebseinheit angeordnet sind und die Antriebseinheit lösbar am Rumpfbauteil angeordnet ist.

## Claims

1. Surfboard with an electric drive (2), and
a battery for the electric drive (2), said battery being arranged in a battery housing (3), a first recess (4) for the battery housing (3), and
a handle (5) on the battery housing (3),
wherein the handle (5) is designed as a bracket handle,
which is mounted pivotably on opposite sides 6 of the battery housing 3 and
the handle has a locking mechanism (7) with the first recess (4) and the handle (5) has a projection (8) on each of the opposing sides (6) which, when the handle (5) is folded down, in each case engages under a lug (9) inside the first recess (4) and firmly fixes the battery housing (3) in the first recess (4).

2. Surfboard according to claim 1,
**characterised in that** as locking mechanism (7) during insertion of the battery housing (3) into the first recess (4), by folding down of the handle (3), the projection (8) engages under the pin (9) and frees the lug (9) by folding up of the handle (5) during removal of the battery housing (3).

3. Surfboard according to claim 1 or 2,
**characterised in that** a pylon (10) is provided on the base wall of the first recess (4) and the battery housing (3) has a second recess (11) with a socket to accommodate the pylon (10), wherein after insertion of the battery housing (3) into the first recess (4) and engagement of the projection (8) under the lug (9) by folding down of the handle (5), the socket and the pylon (10) are arranged so that they form an electrical plug contact.

4. Surfboard according to claim 3,
**characterised in that** the plug contact is a high-current plug contact.

5. Surfboard according to one of claims 1 to 4,
**characterised in that**
the handle (5) can be recessed below a deck.

6. Surfboard according to claim 5,
**characterised in that**
after the handle 5 has been folded down it is recessed in a third recess 12 in the battery housing 3.

7. Surfboard according to claim 5 or 6,
**characterised in that** the handle (5) has a lifting device (13) exhibits.

8. Surfboard according to one of claims 1 to 7,
**characterised in that** the first recess (4) is arranged in an upper side of the surfboard (1).

9. Surfboard according to one of claims 1 to 8,
**characterised in that**
the first recess (4) is arranged in the rear part of the surfboard.

10. Surfboard according to claim 8 or 9,
**characterised in that** an upper side of the battery housing (3) and the upper side of the surfboard (1) form a flat deck.

11. Surfboard according to claim 8, 9 or 10,
**characterised in that** on the upper side of the surfboard (1) a side wall of the first recess (4) forms a groove (31) into which a cover (14) is inserted and an upper side of the cover (14) and the upper side of the surfboard (1) form a flat deck.

12. Surfboard according to claim 8, 9 or 10,
**characterised in that** the side wall of the first recess (4) forms the groove (31) on the upper side of the surfboard, and the upper side of the battery housing (3) forms an overlap (32), and the overlap (32) lies in the groove (31) and the upper side of the battery housing (3) with the overlap (32) and the upper side of the surfboard (1) for the flat deck.

13. Surfboard according to one of the preceding claims,
**characterised by** an inflatable hull component and a drive unit and **characterised in that** the battery and the electric drive (2) are arranged in the drive unit and the drive unit is arranged releasably on the hull component.

## Revendications

1. Planche de surf avec un entraînement électrique (2) et
un accumulateur pour l'entraînement électrique (2), l'accumulateur étant placé dans un boîtier d'accumulateur (3) et
un premier évidement (4) pour le boîtier d'accumulateur (3) et
une poignée (5) sur le boîtier d'accumulateur (3),
la poignée (5) étant configurée comme une poignée tubulaire qui est montée pivotante sur des côtés opposés (6) du boîtier d'accumulateur (3) et la poignée (5) présentant un mécanisme de verrouillage (7) avec le premier évidement (4) et la poignée (5) présentant sur les côtés opposés (6) respectivement un ergot (8) qui, lorsque la poignée (5) est rabattue vers le bas, vient en prise par en dessous avec respectivement un tourillon (9) sur la paroi intérieure du premier évidement (4) et fixant ferment le boîtier d'accumulateur (3) dans le premier évidement (4).

2. Planche de surf selon la revendication 1,
**caractérisée en ce que**, comme mécanisme de verrouillage (7), l'ergot (8) vient en prise par en dessous avec le tourillon (9), lors de la mise en place du boîtier d'accumulateur (3) dans le premier évidement (4) en rabattant la poignée (3) vers le bas et dégage le tourillon (9) en rabattant la poignée (5) vers le haut lors du retrait du boîtier d'accumulateur (3).

3. Planche de surf selon la revendication 1 ou 2,
**caractérisée en ce qu'**un pylône (10) est prévu sur la paroi du fond du premier évidement (4) et que le boîtier d'accumulateur (3) présente un second évidement (11) avec un manchon pour recevoir le pylône (10), cependant que le manchon et le pylône (10) sont placés de telle manière que, lors de la mise en place du boîtier d'accumulateur (3) dans le premier évidement (4) et de la prise par en dessous de l'ergot (8) en dessous du tourillon (3) en rabattant la poignée (3) vers le bas, ils forment un contact électrique enfichable.

4. Planche de surf selon la revendication 3,
**caractérisée en ce que** le contact enfichable est un contact enfichable à courant élevé.

5. Planche de surf selon l'une des revendications 1 à 4,
**caractérisée en ce que**
la poignée (5) est escamotable en dessous d'un marchepied.

6. Planche de surf selon la revendication 5,
**caractérisée en ce que**
la poignée (5) est enfoncée dans le boîtier d'accumulateur (3) après avoir été rabattue dans un troisième évidement (12).

7. Planche de surf selon la revendication 5 ou 6,
**caractérisée en ce que**
la poignée (5) présente un dispositif pour tirer vers le haut (13).

8. Planche de surf selon l'une des revendications 1 à 7,
**caractérisée en ce que**
le premier évidement (4) est placé dans une face supérieure de la planche de surf (1).

9. Planche de surf selon l'une des revendications 1 à 8,
**caractérisée en ce que**
le premier évidement (4) est placé dans la partie arrière de la planche de surf.

10. Planche de surf selon la revendication 8 ou 9,
**caractérisée en ce qu'**une face supérieure du boîtier d'accumulateur (3) et la face supérieure de la planche de surf (1) forment un marchepied plan.

11. Planche de surf selon la revendication 8, 9 ou 10,
**caractérisée en ce qu'**une paroi latérale du premier évidement (4) forme une rainure (31) sur la face supérieure de la planche de surf (1), rainure dans laquelle un recouvrement (14) est mis en place et une face supérieure du recouvrement (14) et la face supérieure de la planche de surf (1) forment un marchepied plan.

12. Planche de surf selon la revendication 8, 9 ou 10,
**caractérisée en ce que** la paroi latérale du premier évidement (4) forme une rainure (31) sur la face supérieure de la planche de surf et la face supérieure du boîtier d'accumulateur (3) forme un chevauchement (32) et le chevauchement (32) se situe dans la rainure (31) et la face supérieure du boîtier d'accumulateur (3) avec le chevauchement (32) et la face supérieure de la planche de surf (1) forment le marchepied plan.

13. Planche de surf selon l'une des revendications précédentes,
**caractérisée par** une partie coque gonflable et une unité d'entraînement et **caractérisée en ce que** l'accumulateur et l'entraînement électrique (2) sont placés dans l'unité d'entraînement et l'unité d'entraînement est placée de manière amovible sur la partie coque.
